# EUROPEAN PATENT APPLICATION

(11) **EP 2 736 104 A1**
(43) Date of publication of application: **28.05.2014**
(21) Application number: 13795984.7
(22) Date of filing: 30.03.2013
(51) Int. Cl.: H01M 4/131, H01M 10/0525

(54) **LITHIUM-RICH SOLID SOLUTION POSITIVE ELECTRODE COMPOSITE MATERIAL AND METHOD FOR PREPARING SAME, LITHIUM ION BATTERY POSITIVE ELECTRODE PLATE AND LITHIUM ION BATTERY**

(30) Priority: 17.09.2012 CN 201210345356
(71) Applicant: Huawei Technologies Co., Ltd., Shenzhen, Guangdong 518129 (CN)
(72) Inventor: CHEN, Chaohui, Shenzhen Guangdong 518129 (CN)
(74) Representative: Haley, Stephen
(86) International application number: PCT/CN2013/073521
(87) International publication number: WO 2014/040410

(57) **Abstract**

Embodiments of the present invention provide a lithium-enriched solid solution anode composite material, which includes xLi₂MnO₃·(1-x)MO and a LiMePO₄ layer that is clad on a surface of xLi₂MnO₃·(1-x)MO, where x<1, M is one or more selected from: Ni, Co, Mn, Ti, and Zr, and Me is one or more selected from: Co, Ni, V, and Mg. The lithium-enriched solid solution anode composite material has high stability in an electrolyte, may improve a cycle life, discharge capacity, rate performance, and initial charge-discharge efficiency of a lithium-ion battery, and is applicable in a condition of a high voltage greater than 4.6V. The embodiments of the present invention further provide a preparation method for the lithium-enriched solid solution anode composite material, a lithium-ion battery anode plate containing the lithium-enriched solid solution anode composite material, and a lithium-ion battery containing the lithium-ion battery anode plate.

## Description

This application claims priority to Chinese Patent Application No. 201210345356.X, filed with the Chinese Patent Office on September 17, 2012, and entitled "LITHIUM-ENRICHED SOLID SOLUTION ANODE COMPOSITE MATERIAL AND PREPARATION METHOD FOR LITHIUM-ENRICHED SOLID SOLUTION ANODE COMPOSITE MATERIAL, LITHIUM-ION BATTERY ANODE PLATE, AND LITHIUM-ION BATTERY", which is incorporated herein by reference in its entirety.

### TECHNICAL FIELD

The present invention relates to the field of lithium-ion batteries, and in particular, to a lithium-enriched solid solution anode composite material and a preparation method for the lithium-enriched solid solution anode composite material, a lithium-ion battery anode plate, and a lithium-ion battery.

### BACKGROUND

Among various energy storage technologies, a lithium-ion battery is considered as a next generation portable high-efficiency chemical power source due to advantages such as high energy density, long cycle life, light weight, and no pollution. Currently, a lithium-ion battery has been widely used in a digital camera, a smart phone, a notebook computer, and so on. With the further improvement of energy density of the lithium-ion battery, the lithium-ion battery will be gradually applied in electric vehicles (an electric bicycle, an electric car, and a hybrid car), power networks and other large-scale energy storage fields.

The development of an anode material has been a critical factor that constraints the further improvement of the energy density of the lithium-ion battery. Currently, commonly used anode materials are lithium cobalt oxide (LCO), lithium manganese oxide (LMO), lithium ferric phosphate (LFP), and nickel-cobalt-manganese (NCM) ternary materials, but specific capacity of these anode materials is smaller than 160 mAh/g. Energy density of a current lithium-ion battery can be further improved only by developing a new high-capacity anode material.

Thackeray et al set forth a lithium-enriched solid solution anode material xLi[Li_{1/3}Mn_{2/3}]O₂·(1-x)LiMO₂ (M is one or more of: Ni, Co, Mn, Ti, and Zr). The lithium-enriched solid solution anode material is formed by a layered compound Li[Li_{1/3}Mn_{2/3}]O₂, namely, (Li₂MnO₃), and a layered compound LiMO₂, may also be represented by xLi₂MnO₃·(1-x) LiMO₂ (M is one or more of: Ni, Co, Mn, Ti, and Zr), and has a layered-layered structure (layered-layered structure). In recent years, the lithium-enriched solid solution anode material has become a development direction of a next generation anode material, because of high discharge capacity (>250 mAh/g, charging voltage>4.6 V) and a low cost. In a charge-discharge process (>4.5 V), a surface of a lithium-enriched solid solution anode material with such a Layered-Layered structure undergoes sensitization reactions, and the reactions are as follows:

*LiMO*₂ → *Li*₁₋*ₓMO*_{2-*δ*} + *xLi*⁺ + *δ*/2*O*₂ *+ xe* Formula (1),

and

*Li*₂*MnO*₃ *→ MnO*₂ + 2*Li*⁺ + 1/2*O*₂ + 2e Formula (2).

Influences on electrochemical properties are as follows: Li₂O is formed due to generation of O₂, and in a charge process, it is difficult for Li₂O to be changed back, which causes that initial charge-discharge efficiency is relatively low (about 70%); cycle performance is inhibited with a change of the structure; and damage to the surface has a certain influence on rate performance of the lithium-enriched solid solution anode material. At the same time, when a potential of an anode is greater than 4.5 V, in a cycle process, manganese in the material may be separated out, which causes that material capacity fast fades. Therefore, although the lithium-enriched solid solution anode material with a layered-layered structure has high theoretic specific capacity, fast capacity fading is caused because the lithium-enriched solid solution anode material is unstable in a condition of a high voltage.

A new lithium-enriched solid solution anode material xLi₂MnO₃·(1-x) MO (M is one or more of: Ni, Co, Mn, Ti, and Zr) with a layered-rocksalt structure (layered-rocksalt structure) has been reported. Compared with a conventional layered-layered lithium-enriched solid solution anode material, this type of lithium-enriched solid solution anode material with a layered-rocksalt structure does not undergo the reaction represented by Formula (1) in a charge-discharge process, that is, initial charge-discharge efficiency is improved to some extent. However, in the charge-discharge process, a Li₂MnO₃ phase in the lithium-enriched solid solution anode material still undergoes the reaction represented by Formula (2), that is, oxygen evolution occurs, so that a surface of the lithium-enriched solid solution anode material with a layered-rocksalt structure is still unstable, and a side reaction occurs at an interface with an electrolyte; and moreover, this type of material has no contribution to improvement of discharge capacity and rate performance of the conventional lithium-enriched solid solution anode material with a layered-layered structure.

### SUMMARY

In view of this, in a first aspect, an embodiment of the present invention provides a lithium-enriched solid solution anode composite material, so as to solve problems in the prior art that a lithium-enriched solid solution anode material is unstable in a condition of a high voltage, and a cycle life, discharge capacity, rate performance, and initial charge-discharge efficiency of a manufactured lithium-ion battery are poor. In a second aspect, an embodiment of the present invention provides a preparation method for the lithium-enriched solid solution anode composite material. In a third aspect, an embodiment of the present invention provides a lithium-ion battery anode plate containing the lithium-enriched solid solution anode composite material. In a fourth aspect, an embodiment of the present invention provides a lithium-ion battery containing the lithium-ion battery anode plate.

In a first aspect, an embodiment of the present invention provides a lithium-enriched solid solution anode composite material, where the lithium-enriched solid solution anode composite material is formed by xLi₂MnO₃·(1-x) MO and a LiMePO₄ layer that is clad on a surface of xLi₂MnO₃·(1-x) MO, x<1, M is one or more selected from: Ni, Co, Mn, Ti, and Zr, and Me is one or more selected from: Co, Ni, V, and Mg.

In the first aspect of the embodiment of the present invention, xLi₂MnO₃·(1-x) MO (x<1, and M is one or more selected from: Ni, Co, Mn, Ti, and Zr) and the LiMePO₄ layer (Me is one or more selected from: Co, Ni, V, and Mg) form a cladding structure.

LiMePO₄ is a phosphate system. The LiMePO₄ layer (Me is one or more selected from: Co, Ni, V, and Mg) can improve stability of xLi₂MnO₃·(1-x) MO (x<1, and M is one or more selected from: Ni, Co, Mn, Ti, and Zr) at a high voltage (>4.6 V), thereby improving a cycle life of xLi₂MnO₃·(1-x) MO. A reason lies in that a LiPF₆-based electrolyte is a most basic component in a current lithium-ion battery electrolyte. However, because the electrolyte inevitably contains a small amount of water, a decomposition product (such as PF₅) of LiPF₆ reacts with water to generate HF that is prone to corrode an anode material. By cladding a cladding material that has a corrosion resistance function on an acid material in the electrolyte on the surface of xLi₂MnO₃·(1-x) MO, contact area between the electrolyte and xLi₂MnO₃·(1-x) MO can be reduced, and corrosion performed by the electrolyte on the surface of xLi₂MnO₃·(1-x) MO can be alleviated, so that the corrosion on the surface of xLi₂MnO₃·(1-x) MO in a charge-discharge process is inhibited, and a side reaction on the surface of xLi₂MnO₃·(1-x) MO in the charge-discharge process is inhibited, thereby improving the cycle life of xLi₂MnO₃·(1-x) MO.

Preferably, a thickness of the LiMePO₄ layer is 1 - 10nm.

A position of Me is not limited, and Me may be clad on the surface of xLi₂MnO₃·(1-x) MO together with Li₃PO₄, or may be embedded in a crystal lattice of xLi₂MnO₃·(1-x) MO, or the two situations exist together, where x<1, and M is one or more selected from: Ni, Co, Mn, Ti, and Zr.

When Me is clad on the surface of xLi₂MnO₃·(1-x) MO, when being charged, Me is embedded in lithium, thereby improving discharge capacity of xLi₂MnO₃·(1-x) MO, and moreover, Me and Li₃PO₄ may also improve conductivity of xLi₂MnO₃·(1-x) MO, thereby improving rate performance of xLi₂MnO₃·(1-x) MO.

When Me is embedded in the crystal lattice of xLi₂MnO₃·(1-x) MO, oxygen in xLi₂MnO₃·(1-x) MO is stabilized, so that oxygen evolution is reduced, thereby improving initial charge-discharge efficiency and a cycle life of xLi₂MnO₃·(1-x) MO; and moreover, more lithium may also be taken out in charging, thereby improving the discharge capacity of xLi₂MnO₃·(1-x)MO.

Preferably, a part of Me in LiMePO₄ is clad on the surface of xLi₂MnO₃·(1-x) MO, and the other part is embedded in the crystal lattice of xLi₂MnO₃·(1-x)MO.

The lithium-enriched solid solution anode composite material provided in the first aspect of the embodiment of the present invention has high stability in an electrolyte, may improve a cycle life, discharge capacity, rate performance, and initial charge-discharge efficiency of a lithium-ion battery, and is applicable in a condition of a high voltage greater than 4.6V.

In a second aspect, an embodiment of the present invention provides a preparation method for a lithium-enriched solid solution anode composite material, which includes the following steps:
obtaining xLi₂MnO₃·(1-x)MO, where x<1, and M is one or a combination of: Ni, Co, Mn, Ti, and Zr;
mixing ammonium dihydrogen phosphate, glycolic acid, Me(NO₃)₂, and lithium nitrate at a molar ratio of 1 - 3:0.01 - 0.5:1:1 - 5, so as to obtain a Me-containing mixed solution; and
adding xLi₂MnO₃·(1-x)MO to the Me-containing mixed solution at a molar ratio of 50 - 100:1, and performing ultrasonic dispersion, and placing, in a water bath, the Me-containing mixed solution that has undergone ultrasonic dispersion, and baking for 4 - 24 h in a stirring condition at a temperature of 50 - 100°C; and grinding a baked solid product into powder, and then placing the power in a Muffle furnace and annealing for 12 - 48 h at a temperature of 350 - 800°C, so as to obtain a lithium-enriched solid solution anode composite material formed by xLi₂MnO₃·(1-x) MO and a LiMePO₄ layer that is clad on a surface of xLi₂MnO₃·(1-x) MO, where x<1, M is one or more selected from: Ni, Co, Mn, Ti, and Zr, and Me is one or more selected from: Co, Ni, V, and Mg.

Preferably, an annealing condition is annealing for 24 h at a temperature of 450°C to obtain a lithium-enriched solid solution anode composite material.

Preferably, the molar ratio of the ammonium dihydrogen phosphate, glycolic acid, Me(NO₃)₂, and lithium nitrate is 1:0.05:1:1, where Me is one or more selected from: Co, Ni, V, and Mg.

Preferably, the molar ratio at which xLi₂MnO₃·(1-x)MO is added to the Me-containing mixed solution is 75:1.

Preferably, baking is baking for 12 h in a stirring condition at a temperature of 80°C.

Preferably, xLi₂MnO₃·(1-x)MO, where x<1, and M is one or a combination of: Ni, Co, Mn, Ti, and Zr, is obtained through preparation by adopting the following method: ultrasonically dispersing Li₂MnO₃ in an HNO₃ solution of M(NO₃)₂ at a molar ratio of Li₂MnO₃:M(NO₃)₂:HNO₃ of 1 - 2:0.5 - 1:0.1 - 0.5, so as to obtain a mixed solution of Li₂MnO₃, M(NO₃)₂, and HNO₃; placing the mixed solution of Li₂MnO₃, M(NO₃)₂, and HNO₃ in a water bath, and baking for 4 - 24 h in a stirring condition at 50 - 100°C; and grinding a baked solid product into powder, and then placing the powder in a Muffle furnace and annealing for 12 - 48 h at a temperature of 350 - 800°C, so as to obtain xLi₂MnO₃·(1-x)MO, where x<1, and M is one or a combination of: Ni, Co, Mn, Ti, and Zr.

In the preparation method of xLi₂MnO₃·(1-x)MO, x<1, and M is one or a combination of: Ni, Co, Mn, Ti, and Zr, and more preferably, an annealing condition is annealing for 24 h at a temperature of 450°C, so as to obtain xLi₂MnO₃·(1-x)MO.

More Preferably, Li₂MnO₃ is obtained through preparation by adopting the following method: adding MnCO₃ to a LiOH solution at a molar ratio of MnCO₃:LiOH of 1:2 - 4, so as to obtain a mixed solution of MnCO₃ and LiOH; fully stirring the mixed solution of MnCO₃ and LiOH for dissolution, and then placing the solution in an air blast drying cabinet, and baking for 4 - 24 h at a temperature of 50 - 100°C; and grinding a baked solid product into powder, and then placing the powder in a Muffle furnace and annealing for 12 - 48 h at a temperature of 350 - 800°C, so as to obtain Li₂MnO₃.

In the preparation method of Li₂MnO₃, more preferably, an annealing condition is annealing for 12 h at a temperature of 750°C, so as to obtain Li₂MnO₃.

The preparation method for a lithium-enriched solid solution anode composite material provided in the second aspect of the embodiment of the present invention is simple and flexible, and the prepared lithium-enriched solid solution anode composite material may improve discharge capacity, rate performance, initial charge-discharge efficiency, and a cycle life of a lithium-ion battery.

In a third aspect, an embodiment of the present invention provides a lithium-ion battery anode plate, where the lithium-ion battery anode plate includes a current collector and a lithium-enriched solid solution anode composite material coated on the current collector, and the lithium-enriched solid solution anode composite material is formed by xLi₂MnO₃-(1-x)MO and a LiMePO₄ layer that is clad on a surface of xLi₂MnO₃·(1-x)MO, x<1, M is one or more selected from: Ni, Co, Mn, Ti, and Zr, and Me is one or more selected from: Co, Ni, V, and Mg.

A preparation method for the lithium-ion battery anode plate includes: mixing a lithium-enriched solid solution anode composite material, a conductive agent, an adhesive, and a solvent, so as to obtain a paste; and coating the paste on a current collector, and then performing drying and tabletting, so as to obtain a lithium-ion battery anode plate.

The lithium-ion battery anode plate provided in the third aspect of the embodiment of the present invention may be used to prepare a lithium-ion battery.

In a fourth aspect, an embodiment of the present invention provides a lithium-ion battery, which includes a lithium-ion battery anode plate, a lithium-ion battery cathode plate, a membrane, and an electrolyte. The lithium-ion battery anode plate includes a current collector and a lithium-enriched solid solution anode composite material coated on the current collector, where the lithium-enriched solid solution anode composite material is formed by xLi₂MnO₃·(1-x) MO and a LiMePO₄ layer that is clad on a surface of xLi₂MnO₃·(1-x) MO, x<1, M is one or more selected from: Ni, Co, Mn, Ti, and Zr, and Me is one or more selected from: Co, Ni, V, and Mg.

The lithium-ion battery provided in the fourth aspect of the embodiment of the present invention has a long cycle life and has excellent discharge capacity, rate performance, and initial charge-discharge efficiency.

The advantages of the embodiments of the present invention are described in the following specification, and a part of the advantages are obvious according to the specification, or may be learned through implementation of the embodiments of the present invention.

### BRIEF DESCRIPTION OF DRAWINGS

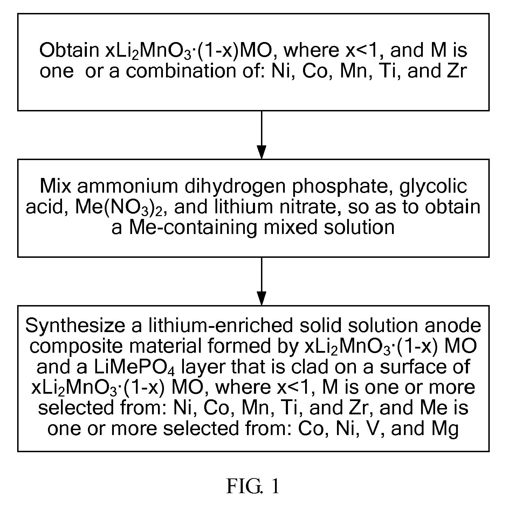

FIG. 1 is a flow chart of a preparation method for a lithium-enriched solid solution anode composite material according to a specific embodiment of the present invention.

### DESCRIPTION OF EMBODIMENTS

The following descriptions are exemplary implementation manners of the embodiments of the present invention. It should be noted that, improvements and modifications may also be made by persons of ordinary skill in the art without departing from the principles of the embodiments of the present invention; however, these improvements and modifications shall also fall within the protection scope of the present invention.

In a first aspect, an embodiment of the present invention provides a lithium-enriched solid solution anode composite material, so as to solve problems in the prior art that a lithium-enriched solid solution anode material is unstable in a condition of a high voltage, and a cycle life, discharge capacity, rate performance, and initial charge-discharge efficiency of a manufactured lithium-ion battery are poor. In a second aspect, an embodiment of the present invention provides a preparation method for the lithium-enriched solid solution anode composite material. In a third aspect, an embodiment of the present invention provides a lithium-ion battery anode plate containing the lithium-enriched solid solution anode composite material. In a fourth aspect, an embodiment of the present invention provides a lithium-ion battery containing the lithium-ion battery anode plate.

In a first aspect, an embodiment of the present invention provides a lithium-enriched solid solution anode composite material, where the lithium-enriched solid solution anode composite material is formed by xLi₂MnO₃·(1-x)MO and a LiMePO₄ layer that is clad on a surface of xLi₂MnO₃·(1-x) MO, x<1, M is one or more selected from: Ni, Co, Mn, Ti, and Zr, and Me is one or more selected from: Co, Ni, V, and Mg.

In the first aspect of the embodiment of the present invention, xLi₂MnO₃·(1-x) MO (x<1, and M is one or more selected from: Ni, Co, Mn, Ti, and Zr) and the LiMePO₄ layer (Me is one or more selected from: Co, Ni, V, and Mg) form a cladding structure.

LiMePO₄ is a phosphate system. The LiMePO₄ layer (Me is one or more selected from: Co, Ni, V, and Mg) can improve stability of xLi₂MnO₃·(1-x) MO(x<1, and M is one or more selected from: Ni, Co, Mn, Ti, and Zr) at a high voltage (>4.6 V), thereby improving a cycle life of xLi₂MnO₃·(1-x)MO. A reason lies in that a LiPF₆-based electrolyte is a most basic component in a current lithium-ion battery electrolyte. However, because the electrolyte inevitably contains a small amount of water, a decomposition product (such as PF₅) of LiPF₆ reacts with water to generate HF that is prone to corrode an anode material. By cladding a cladding material that has a corrosion resistance function on an acid material in the electrolyte on the surface of xLi₂MnO₃·(1-x) MO, contact area between the electrolyte and xLi₂MnO₃·(1-x) MO can be reduced, and corrosion performed by the electrolyte on the surface of xLi₂MnO₃·(1-x) MO can be alleviated, so that the corrosion on the surface of xLi₂MnO₃·(1-x) MO in a charge-discharge process is inhibited, and a side reaction on the surface of xLi₂MnO₃·(1-x)MO in the charge-discharge process is inhibited, thereby improving the cycle life of xLi₂MnO₃·(1-x)MO.

Discharge capacity of LiMePO₄ is smaller than that of xLi₂MnO₃·(1-x)MO, and an excessively large thickness of the LiMePO₄ layer may inhibit an electrochemical property of xLi₂MnO₃·(1-x)MO. Therefore, in order to have a better electrochemical property of the lithium-enriched solid solution anode composite material, the thickness of the LiMePO₄ layer is 1 - 10nm.

A position of Me is not limited, and Me may be clad on the surface of xLi₂MnO₃·(1-x)MO together with Li₃PO₄, or may be embedded in a crystal lattice of xLi₂MnO₃·(1-x) MO, or the two situations exist together, where x<1, and M is one or more selected from: Ni, Co, Mn, Ti, and Zr.

When Me is clad on the surface of xLi₂MnO₃·(1-x)MO, when being charged, Me is embedded in lithium, thereby improving discharge capacity of xLi₂MnO₃·(1-x) MO, and moreover, Me and Li₃PO₄ may also improve conductivity of xLi₂MnO₃·(1-x)MO, thereby improving rate performance of xLi₂MnO₃·(1-x) MO.

When Me is embedded in the crystal lattice of xLi₂MnO₃·(1-x)MO, oxygen in xLi₂MnO₃·(1-x)MO is stabilized, so that oxygen evolution is reduced, thereby improving initial charge-discharge efficiency and a cycle life of xLi₂MnO₃·(1-x)MO; and moreover, more lithium may also be taken out in charging, thereby improving the discharge capacity of xLi₂MnO₃·(1-x)MO.

In this embodiment, a part of Me in LiMePO₄ is clad on the surface of xLi₂MnO₃·(1-x)MO, and the other part is embedded in the crystal lattice of xLi₂MnO₃·(1-x) MO.

The lithium-enriched solid solution anode composite material provided in the first aspect of the embodiment of the present invention has high stability in an electrolyte, may improve a cycle life, discharge capacity, rate performance, and initial charge-discharge efficiency of a lithium-ion battery, and is applicable in a condition of a high-voltage greater than 4.6V.

In a second aspect, an embodiment of the present invention provides a preparation method for a lithium-enriched solid solution anode composite material, as shown in FIG. 1, which includes the following steps:
obtaining xLi₂MnO₃·(1-x)MO, where x<1, and M is one or a combination of: Ni, Co, Mn, Ti, and Zr;
mixing ammonium dihydrogen phosphate, glycolic acid, Me(NO₃)₂, and lithium nitrate at a molar ratio of 1 - 3:0.01 - 0.5:1:1 - 5, so as to obtain a Me-containing mixed solution; and
adding xLi₂MnO₃·(1-x)MO to the Me-containing mixed solution at a molar ratio of 50 - 100:1, and performing ultrasonic dispersion, and placing, in a water bath, the Me-containing mixed solution that has undergone ultrasonic dispersion, and baking for 4 - 24 h in a stirring condition at a temperature of 50 - 100°C; and grinding a baked solid product into powder, and then placing the power in a Muffle furnace and annealing for 12 - 48 h at a temperature of 350 - 800°C, so as to obtain a lithium-enriched solid solution anode composite material formed by xLi₂MnO₃·(1-x) MO and a LiMePO₄ layer that is clad on a surface of xLi₂MnO₃·(1-x) MO, where x<1, M is one or more selected from: Ni, Co, Mn, Ti, and Zr, and Me is one or more selected from: Co, Ni, V, and Mg.

An annealing condition is annealing for 24 h at a temperature of 450°C to obtain a lithium-enriched solid solution anode composite material.

The molar ratio of the ammonium dihydrogen phosphate, glycolic acid, Me(NO₃)₂, and lithium nitrate is 1:0.05:1:1, where Me is one or more selected from: Co, Ni, V, and Mg.

The molar ratio at which xLi₂MnO₃·(1-x)MO is added to the Me-containing mixed solution is 75:1.

Baking is baking for 12 h in a stirring condition at a temperature of 80°C.

xLi₂MnO₃·(1-x)MO, where x<1, and M is one or a combination of: Ni, Co, Mn, Ti, and Zr, is obtained through preparation by adopting the following method: ultrasonically dispersing Li₂MnO₃ in an HNO₃ solution of M(NO₃)₂ at a molar ratio of Li₂MnO₃:M(NO₃)₂:HNO₃ of 1 - 2:0.5 - 1:0.1 - 0.5, so as to obtain a mixed solution of Li₂MnO₃, M(NO₃)₂, and HNO₃; placing the mixed solution of Li₂MnO₃, M(NO₃)₂, and HNO₃ in a water bath, and baking for 4 - 24 h in a stirring condition at 50 - 100°C; and grinding a baked solid product into powder, and then placing the powder in a Muffle furnace and annealing for 12 - 48 h at a temperature of 350 - 800°C, so as to obtain xLi₂MnO₃·(1-x)MO, where x<1, and M is one or a combination of: Ni, Co, Mn, Ti, and Zr.

In the preparation method of xLi₂MnO₃·(1-x)MO, x<1, and M is one or a combination of: Ni, Co, Mn, Ti, and Zr, and an annealing condition is annealing for 24 h at a temperature of 450°C, so as to obtain xLi₂MnO₃·(1-x)MO.

Li₂MnO₃ is obtained through preparation by adopting the following method: adding MnCO₃ to a LiOH solution at a molar ratio of MnCO₃:LiOH of 1:2 - 4, so as to obtain a mixed solution of MnCO₃ and LiOH; fully stirring the mixed solution of MnCO₃ and LiOH for dissolution, and then placing the solution in an air blast drying cabinet, baking for 4 - 24 h at a temperature of 50 - 100°C; and grinding a baked solid product into powder, and then placing the powder in a Muffle furnace and annealing for 12 - 48 h at a temperature of 350 - 800°C, so as to obtain Li₂MnO₃.

In the preparation method of Li₂MnO₃, an annealing condition is annealing for 12 h at a temperature of 750°C, so as to obtain Li₂MnO₃.

The preparation method for a lithium-enriched solid solution anode composite material provided in the second aspect of the embodiment of the present invention is simple and flexible, and the prepared lithium-enriched solid solution anode composite material may improve discharge capacity, rate performance, initial charge-discharge efficiency, and a cycle life of a lithium-ion battery.

In a third aspect, an embodiment of the present invention provides a lithium-ion battery anode plate, where the lithium-ion battery anode plate includes a current collector and a lithium-enriched solid solution anode composite material coated on the current collector, and the lithium-enriched solid solution anode composite material is formed by xLi₂MnO₃·(1-x) MO and a LiMePO₄ layer that is clad on a surface of xLi₂MnO₃·(1-x) MO, x<1, M is one or more selected from: Ni, Co, Mn, Ti, and Zr, and Me is one or more selected from: Co, Ni, V, and Mg.

A preparation method for the lithium-ion battery anode plate includes: mixing a lithium-enriched solid solution anode composite material, a conductive agent, an adhesive, and a solvent, so as to obtain a paste; and coating the paste on a current collector, and then performing drying and tabletting, so as to obtain a lithium-ion battery anode plate.

The lithium-ion battery anode plate provided in the third aspect of the embodiment of the present invention may be used to prepare a lithium-ion battery.

In a fourth aspect, an embodiment of the present invention provides a lithium-ion battery, which includes a lithium-ion battery anode plate, a lithium-ion battery cathode plate, a membrane, and an electrolyte. The lithium-ion battery anode plate includes a current collector and a lithium-enriched solid solution anode composite material coated on the current collector, where the lithium-enriched solid solution anode composite material is formed by xLi₂MnO₃·(1-x) MO and a LiMePO₄ layer that is clad on a surface of xLi₂MnO₃·(1-x) MO, x<1, M is one or more selected from: Ni, Co, Mn, Ti, and Zr, and Me is one or more selected from: Co, Ni, V, and Mg.

The lithium-ion battery provided in the fourth aspect of the embodiment of the present invention has a long cycle life and has excellent discharge capacity, rate performance, and initial charge-discharge efficiency.

In the following, manufacture and testing of a button lithium-ion battery (model 2025) are taken as an example, and the embodiments of the present invention are further described with multiple embodiments. The embodiments of the present invention are not limited to the following specific embodiments. Without changing the scope of a primary claim, the embodiments may be implemented with a suitable change.

### Embodiment 1

A preparation method for a lithium-enriched solid solution anode composite material includes the following steps:

### (1) Synthesis of Li₂MnO₃

MnCO₃ is added to a LiOH solution at a molar ratio of MnCO₃:LiOH of 1:3, so as to obtain a mixed solution of MnCO₃ and LiOH. The mixed solution of MnCO₃ and LiOH is fully stirred for dissolution, and then placed in an air blast drying cabinet, and baked for 12 h at a temperature of 70°C. A baked solid product is ground into powder, and then placed in a Muffle furnace and annealed for 12 h in a condition of 750°C, so as to obtain Li₂MnO₃.

### (2) Synthesis of 0.9Li₂MnO₃·0.1NiO

Li₂MnO₃ is ultrasonically dispersed in an HNO₃ solution ofNi (NO₃)₂ at a molar ratio of Li₂MnO₃:Ni(NO₃)₂:HNO₃ of 1.5:0.75:0.25, so as to obtain a mixed solution of Li₂MnO₃, Ni(NO₃)₂, and HNO₃. The mixed solution of Li₂MnO₃, Ni(NO₃)₂, and HNO₃ is placed in a water bath, and baked for 12 h in a stirring condition at 80°C. A baked solid product is ground into powder, and then placed in a Muffle furnace and annealed for 24 h in a condition of 450°C, so as to obtain 0.9Li₂MnO₃·0.1NiO.

### (3) Synthesis of a lithium-enriched solid solution anode composite material

Ammonium dihydrogen phosphate, glycolic acid, Ni(NO₃)₂, and lithium nitrate are mixed at a molar ratio of 1:0.05:1:1, so as to obtain a Ni-containing mixed solution. 0.9Li₂MnO₃·0.1NiO prepared in step (2) is added to the Ni-containing mixed solution at a molar ratio of 75:1, and ultrasonic dispersion is performed. The Ni-containing mixed solution that has undergone ultrasonic dispersion is placed in a water bath, and baked for 12 h in a stirring condition at 80°C. An obtained solid product is ground into powder, and placed in a Muffle furnace and annealed for 24 h in a condition of 450°C, so as to obtain a lithium-enriched solid solution anode composite material formed by 0.9Li₂MnO₃·0.1NiO and a LiNiPO₄ layer that is clad on a surface of 0.9Li₂MnO₃·0.1NiO.

### Preparation method for a lithium-ion battery anode plate

The lithium-enriched solid solution anode composite material, conductive graphite, CMC, and water are mixed at a ratio of 8:1:1:100, and the mixture is evenly stirred as a paste by using isopropyl alcohol. The paste is evenly coated on a copper sheet, and dried in vacuum for 18 h at 120°C, and tableted, so as to obtain a lithium-ion battery anode plate.

### Preparation method for a lithium-ion battery

In a glove box under the protection of Ar, the lithium-ion battery anode plate prepared in this embodiment, a Li metal cathode plate, a membrane, and an electrolyte are assembled into a button battery of model 2025, and an electrochemical property is tested.

### Embodiment 2

A preparation method for a lithium-enriched solid solution anode composite material in Embodiment 2 is the same as that for the lithium-enriched solid solution anode composite material in Embodiment 1, and a difference only lies in that an annealing temperature in step (3) is 350°C.

A preparation method for a lithium-ion battery anode plate and a preparation method for a lithium-ion battery are the same as the preparation method for the lithium-ion battery anode plate and the preparation method for the lithium-ion battery in Embodiment 1.

### Embodiment 3

A preparation method for a lithium-enriched solid solution anode composite material in Embodiment 3 is the same as that for the lithium-enriched solid solution anode composite material in Embodiment 1, and a difference only lies in that an annealing temperature in step (3) is 750°C.

A preparation method for a lithium-ion battery anode plate and a preparation method for a lithium-ion battery are the same as the preparation method for the lithium-ion battery anode plate and the preparation method for the lithium-ion battery in Embodiment 1.

### Embodiment 4

A preparation method for lithium-enriched solid solution anode composite material includes the following steps:

### (1) Synthesis of Li₂MnO₃

MnCO₃ is added to a LiOH solution at a molar ratio of MnCO₃:LiOH of 1:2, so as to obtain a mixed solution of MnCO₃ and LiOH. The mixed solution of MnCO₃ and LiOH is fully stirred for dissolution, and then placed in an air blast drying cabinet, and baked for 24 h at a temperature of 50°C. A baked solid product is ground into powder, and then placed in a Muffle furnace and annealed for 48 h at a temperature of 350°C, so as to obtain Li₂MnO₃.

### ((2) Synthesis of 0.3Li₂MnO₃·0.7 CoO

Li₂MnO₃ is ultrasonically dispersed in an HNO₃ solution of Co(NO₃)₂ at a molar ratio of Li₂MnO₃:Co(NO₃)₂:HNO₃ of 1:1:0.5, so as to obtain a mixed solution of Li₂MnO₃, Co(NO₃)₂, and HNO₃. The mixed solution of Li₂MnO₃, Co(NO₃)₂, and HNO₃ is placed in a water bath, and baked for 24 h in a stirring condition at 50°C. A baked solid product is ground into powder, and then placed in a Muffle furnace and annealed for 48 h at a temperature of 350°C, so as to obtain 0.3Li₂MnO₃·0.7 CoO.

### (3) Synthesis of a lithium-enriched solid solution anode composite material

Ammonium dihydrogen phosphate, glycolic acid, Co(NO₃)₂, and lithium nitrate are mixed at a molar ratio of 1:0.01:1:1, so as to obtain a Co-containing mixed solution. 0.3Li₂MnO₃·0.7CoO prepared in step (2) is added to the Co-containing mixed solution at a molar ratio of 50:1, and ultrasonic dispersion is performed. The Co-containing mixed solution that has undergone ultrasonic dispersion is placed in a water bath, and baked for 24 h in a stirring condition at a temperature of 50°C. A baked solid product is ground into powder, and placed in a Muffle furnace and annealed for 48 h at a temperature of 350°C, so as to obtain a lithium-enriched solid solution anode composite material formed by 0.3Li₂MnO₃·0.7CoO and a LiCoPO₄ layer that is clad on a surface of 0.3Li₂MnO₃·0.7CoO.

### Embodiment 5

A preparation method for lithium-enriched solid solution anode composite material includes the following steps:

### (1) Synthesis of Li₂MnO₃

MnCO₃ is added to a LiOH solution at a molar ratio of MnCO₃:LiOH of 1:4, so as to obtain a mixed solution of MnCO₃ and LiOH. The mixed solution of MnCO₃ and LiOH is fully stirred for dissolution, and then placed in an air blast drying cabinet, and baked for 4 h at a temperature of 100°C. A baked solid product is ground into powder, and then placed in a Muffle furnace and annealed for 12 h at a temperature of 800°C, so as to obtain Li₂MnO₃.

### (2) Synthesis of 0.6Li₂MnO₃·0.4CoO

Li₂MnO₃ is ultrasonically dispersed in an HNO₃ solution of Co(NO₃)₂ at a molar ratio of Li₂MnO₃:Co(NO₃)₂:HNO₃ of 2:0.5:0.1, so as to obtain a mixed solution of Li₂MnO₃, Co(NO₃)₂, and HNO₃. The mixed solution of Li₂MnO₃, Co(NO₃)₂, and HNO₃ is placed in a water bath, and baked for 4 h in a stirring condition at 100°C. A baked solid product is ground into powder, and then placed in a Muffle furnace and annealed for 12 h at a temperature of 800°C, so as to obtain 0.6Li₂MnO₃·0.4CoO.

### (3) Synthesis of a lithium-enriched solid solution anode composite material

Ammonium dihydrogen phosphate, glycolic acid, Ni(NO₃)₂, and lithium nitrate are mixed at a molar ratio of 3:0.5:1:5, so as to obtain a Ti-containing mixed solution. 0.6Li₂MnO₃·0.4CoO prepared in step (2) is added to the Ni-containing mixed solution at a molar ratio of 100:1, and ultrasonic dispersion is performed. The Ni-containing mixed solution that has undergone ultrasonic dispersion is placed in a water bath, and baked for 4 h in a stirring condition at a temperature of 100°C. A baked solid product is ground into powder, and placed in a Muffle furnace and annealed for 12 h at a temperature of 800°C, so as to obtain a lithium-enriched solid solution anode composite material formed by 0.6Li₂MnO₃·0.4CoO and a LiNiPO₄ layer that is clad on a surface of 0.6Li₂MnO₃·0.4CoO.

### Comparative Example 1

A preparation method for a lithium-enriched solid solution anode material includes the following steps:

### (1) Synthesis of Li₂MnO₃

MnCO₃ is added to a LiOH solution at a molar ratio of MnCO₃:LiOH of 1:3, so as to obtain a mixed solution of MnCO₃ and LiOH. The mixed solution of MnCO₃ and LiOH is fully stirred for dissolution, and then placed in an air blast drying cabinet, and baked for 12 h at a temperature of 70°C. A baked solid product is ground into powder, and then placed in a Muffle furnace and annealed for 24 h in a condition of 450°C, so as to obtain Li₂MnO₃.

### (2) Synthesis of 0.9Li₂MnO₃·0.1NiO

Li₂MnO₃ is ultrasonically dispersed in an HNO₃ solution ofNi (NO₃)₂ at a molar ratio of Li₂MnO₃:Ni(NO₃)₂:HNO₃ of 1.5:0.75:0.25, so as to obtain a mixed solution of Li₂MnO₃, Ni(NO₃)₂, and HNO₃. The mixed solution of Li₂MnO₃, Ni(NO₃)₂, and HNO₃ is placed in a water bath, and baked for 12 h in a stirring condition at 80°C. A baked solid product is ground into powder, and then placed in a Muffle furnace and annealed for 24 h in a condition of 450°C, so as to obtain 0.9Li₂MnO₃·0.1NiO.

### Comparative Example 2

A difference between Comparative Example 2 and Comparative Example 1 only lies in that an annealing temperature in step (2) is 350°C.

### Comparative Example 3

A difference between Comparative Example 2 and Comparative Example 1 only lies in that an annealing temperature in step (2) is 750°C.

Lithium-ion batteries prepared in the foregoing embodiments and comparative examples are test batteries, and are used for performance testing in the following effect embodiments.

### Effect Embodiment

In order to powerfully support beneficial effects of the technical solutions in the embodiments of the present invention, the following performance testing is provided:

### 1. Initial discharge capacity performance testing

Initial discharge capacity of the lithium-ion batteries prepared in the embodiments and comparative examples is measured in conditions that charge and discharge rates are 0.1C and 1C, and charge and discharge voltage ranges are 2 - 4.6 V and 2 - 4.8 V

### 2. Initial charge-discharge efficiency performance testing

Initial discharge capacity and charge capacity of the lithium-ion batteries prepared in the embodiments and comparative examples are measured in the conditions that the charge and discharge rates are 0.1C and 1C, and the charge and discharge voltage ranges are 2 - 4.6 V and 2 - 4.8 V, and the initial charge-discharge efficiency is calculated, that is, the initial charge-discharge efficiency = initial discharge capacity/initial charge capacity.

### 3. 50-cycle capacity performance testing

Discharge capacity of the lithium-ion batteries prepared in the embodiments and comparative examples after 50 cycles is measured in the conditions that the charge and discharge rates are 0.1C and 1C, and the charge and discharge voltage ranges are 2 - 4.6 V and 2 - 4.8 V.

Table 1 - Table 3 show results of the initial discharge capacity performance testing, the initial charge-discharge efficiency performance testing, and the 50-cycle capacity performance testing of the embodiments and the comparative examples of the present invention.

**Table 1 Comparison of electrochemical properties when a charge and discharge current is 0.1C and a charge and discharge voltage range is 2 - 4.6 V**

| Lithium-ion Battery | Initial Discharge Capacity mAh/g | Initial Charge-discharge Efficiency % | 50-cycle Capacity mAh/g |
|---|---|---|---|
| Embodiment 1 | 180 | 85.4 | 254 |
| Embodiment 2 | 200 | 83.2 | 231 |
| Embodiment 3 | 250 | 82.8 | 247 |
| Comparative Example 1 | 164 | 84.1 | 235 |
| Comparative Example 2 | 181 | 82.5 | 215 |
| Comparative Example 3 | 210 | 81.7 | 230 |

**Table 2 Comparison of electrochemical properties when a charge and discharge current is 0.1C and a charge and discharge voltage range is 2 - 4.8 V**

| Lithium-ion battery | Initial Discharge Capacity mAh/g | Initial Charge-discharge Efficiency % | 50-cycle Capacity mAh/g |
|---|---|---|---|
| Embodiment 1 | 207 | 84.1 | 225 |
| Embodiment 2 | 230 | 82.9 | 217 |
| Embodiment 3 | 271 | 80.7 | 211 |
| Comparative Example 1 | 183 | 81.9 | 176 |
| Comparative Example 2 | 195 | 78.4 | 182 |
| Comparative Example 3 | 226 | 79.3 | 171 |

**Table 3 Comparison of electrochemical properties when a charge and discharge current is 1C and a charge and discharge voltage range is 2 - 4.6 V**

| Lithium-ion battery | Initial Discharge Capacity mAh/g | Initial Charge-discharge Efficiency % | 50-cycle Capacity mAh/g |
|---|---|---|---|
| Embodiment 1 | 185 | 82.5 | 219 |
| Embodiment 2 | 191 | 81.3 | 206 |
| Embodiment 3 | 216 | 81.5 | 212 |
| Comparative Example 1 | 154 | 81.4 | 188 |
| Comparative Example 2 | 168 | 80.6 | 176 |
| Comparative Example 3 | 185 | 80.1 | 174 |

It can be seen from testing results in Table 1 - Table 3 that:
(1) in the embodiments of the present invention, a lithium-ion battery is prepared by using a lithium-enriched solid solution anode composite material, and in the comparative examples of the present invention, a lithium-ion battery is prepared by using an unclad lithium-enriched solid solution anode material with a layered-rocksalt structure, and compared with the lithium-ion battery prepared in the comparative examples, the lithium-ion battery prepared in the embodiments of the present invention has high initial discharge capacity, high initial charge-discharge efficiency, and excellent cycle capacity performance; and
(2) in the embodiments of the present invention, changes of an annealing temperature in step (3) in the preparation method for a lithium-enriched solid solution anode composite material has a certain influence on performance of a lithium-ion battery, and when the annealing temperature in step (3) in the preparation method is 450°C, compared with a lithium-ion battery prepared when the annealing temperature is 350°C and 750°C, the lithium-ion battery has more excellent initial charge-discharge efficiency and cycle capacity performance.

## Claims

1. A lithium-enriched solid solution anode composite material, comprising xLi₂MnO₃·(1-x) MO and a LiMePO₄ layer that is clad on a surface of xLi₂MnO₃·(1-x) MO, wherein x<1, M is one or more selected from: Ni, Co, Mn, Ti, and Zr, and Me is one or more selected from: Co, Ni, V, and Mg.

2. The lithium-enriched solid solution anode composite material according to claim 1, wherein a thickness of the LiMePO₄ layer is 1 - 10nm.

3. The lithium-enriched solid solution anode composite material according to claim 1, wherein a part of Me in LiMePO₄ is clad on the surface of xLi₂MnO₃·(1-x) MO, and the other part of Me is embedded in a crystal lattice of xLi₂MnO₃·(1-x) MO.

4. A preparation method for a lithium-enriched solid solution anode composite material, comprising:
obtaining a compound xLi₂MnO₃·(1-x)MO, wherein x<1, and M is one or a combination of: Ni, Co, Mn, Ti, and Zr;
mixing ammonium dihydrogen phosphate, glycolic acid, Me(NO₃)₂, and lithium nitrate at a molar ratio of 1 - 3:0.01 - 0.5:1:1 - 5, so as to obtain a Me-containing mixed solution; and
adding xLi₂MnO₃·(1-x)MO to the Me-containing mixed solution at a molar ratio of 50 - 100:1, and performing ultrasonic dispersion, and placing, in a water bath, the Me-containing mixed solution that has undergone ultrasonic dispersion, and baking for 4 - 24 h in a stirring condition at a temperature of 50 - 100°C; and grinding a baked solid product into powder, and then placing the power in a Muffle furnace and annealing for 12 - 48h at a temperature of 350 - 800°C, so as to obtain a lithium-enriched solid solution anode composite material formed by xLi₂MnO₃·(1-x) MO and a LiMePO₄ layer that is clad on a surface of xLi₂MnO₃·(1-x) MO, wherein x<1, M is one or more selected from: Ni, Co, Mn, Ti, and Zr, and Me is one or more selected from: Co, Ni, V, and Mg.

5. The preparation method for a lithium-enriched solid solution anode composite material according to claim 4, wherein the annealing condition is annealing for 24 h at a temperature of 450°C, so as to obtain the lithium-enriched solid solution anode composite material.

6. The preparation method for a lithium-enriched solid solution anode composite material according to claim 4, wherein the molar ratio of the ammonium dihydrogen phosphate, glycolic acid, Me(NO₃)₂, and lithium nitrate is 1:0.05:1:1, wherein Me is one or more selected from: Co, Ni, V, and Mg.

7. The preparation method for a lithium-enriched solid solution anode composite material according to claim 4, wherein the molar ratio at which xLi₂MnO₃·(1-x)MO is added to the Me-containing mixed solution is 75:1.

8. The preparation method for a lithium-enriched solid solution anode composite material according to claim 4, wherein the baking is baking for 12 h in a stirring condition at a temperature of 80°C.

9. A lithium-ion battery anode plate, comprising a current collector and a lithium-enriched solid solution anode composite material coated on the current collector, wherein the lithium-enriched solid solution anode composite material is formed by xLi₂MnO₃·(1-x) MO and a LiMePO₄ layer that is clad on a surface of xLi₂MnO₃·(1-x)MO, wherein x<1, M is one or more selected from: Ni, Co, Mn, Ti, and Zr, and Me is one or more selected from: Co, Ni, V, and Mg.

10. A lithium-ion battery, comprising a lithium-ion battery anode plate, a lithium-ion battery cathode plate, a membrane, and an electrolyte, wherein the lithium-ion battery anode plate comprises a current collector and a lithium-enriched solid solution anode composite material coated on the current collector, and the lithium-enriched solid solution anode composite material is formed by xLi₂MnO₃·(1-x)MO and a LiMePO₄ layer that is clad on a surface of xLi₂MnO₃·(1-x) MO, wherein x<1, M is one or more selected from: Ni, Co, Mn, Ti, and Zr, and Me is one or more selected from: Co, Ni, V, and Mg.
